# EUROPÄISCHE PATENTSCHRIFT

(11) **EP 2 567 113 B1**
(45) Veröffentlichungstag und Bekanntmachung des Hinweises auf die Patenterteilung: **16.01.2019**
(21) Anmeldenummer: 11709095.1
(22) Anmeldetag: 10.03.2011
(51) Int. Cl.: F16C 19/50, F04C 29/00

(54) **EXZENTERLAGER**
ECCENTRIC BEARING
PALIER EXCENTRIQUE

(30) Priorität: 05.05.2010 DE 102010028598
(43) Veröffentlichungstag der Anmeldung: 13.03.2013
(73) Patentinhaber: Robert Bosch GmbH, 70442 Stuttgart (DE)
(72) Erfinder: HAECKER, Juergen, 71701 Schwieberdingen (DE); ALAZE, Norbert, 71706 Markgroeningen (DE)
(86) Internationale Anmeldenummer: PCT/EP2011/053599
(87) Internationale Veröffentlichungsnummer: WO 2011/138076

(56) Entgegenhaltungen:
- FR-A1- 2 637 660
- JP-A- 61 215 480

## Beschreibung

### Stand der Technik

Die Erfindung betrifft ein Exzenterlager mit den Merkmalen des Oberbegriffs des Anspruchs 1. Das erfindungsgemäße Exzenterlager ist insbesondere für ein elektrohydraulisches Kolbenpumpenaggregat einer hydraulischen Bremsanlage eines Kraftfahrzeugs vorgesehen. Solche Pumpenaggregate werden zur Erzeugung eines hydraulischen Bremsdrucks zu einer Bremsbetätigung in schlupfgeregelten- und/oder Fremdkraft-Bremsanlagen verwendet.

Bekannte Exzenterlager weisen eine Exzenterwelle auf, die einstückig oder in anderer Weise starr und exzentrisch an einer Motorwelle eines Elektromotors oder an einer Ausgangswelle eines Getriebes, das mit dem Elektromotor antreibbar ist, angebracht sind. Auf der Exzenterwelle ist ein Wälzlager mit einem die Exzenterwelle konzentrisch umschließenden Lagerring und mit Wälzkörpern angeordnet, die in einem Spalt zwischen der Exzenterwelle und dem Lagerring um die Welle herum, üblicherweise aber nicht zwingend äquidistant, angeordnet sind. Die Wälzkörper sind üblicherweise Rollen oder Nadeln, es können allerdings auch andere Wälzkörper, beispielsweise Kugeln sein. Der Lagerring kann als Außenring aufgefasst werden, ein Innenring kann vorhanden, beispielsweise auf die Exzenterwelle aufgepresst sein. Allerdings ist kein Innenring notwendig, die Wälzkörper können auch unmittelbar auf der Exzenterwelle wälzen. Außen am Lagerring liegen ein oder mehrere Pumpenkolben des Pumpenkolbenaggregats mit ihren Stirnenden an. Die Pumpenkolben werden beispielsweise mit Federn von außen in Anlage an den Lagerring gedrückt.

Bei einem Drehantrieb führt die Exzenterwelle aufgrund ihrer Exzentrizität eine Bewegung auf einer Kreisbahn aus und dreht sich dabei um sich selbst. Aufgrund der Bewegung der Exzenterwelle auf der Kreisbahn bewegt sich auch der Lagerring auf einer bzw. auf derselben Kreisbahn und treibt dadurch die außen an ihm anliegenden Pumpenkolben zur gewünschten Hubbewegung an, um Bremsflüssigkeit oder allgemein Fluid durch abwechselndes Ansaugen und Verdrängen zu fördern, wie es von Kolbenpumpen bekannt ist. Aufgrund seiner Wälzlagerung dreht sich der Lagerring nicht mit der Exzenterwelle mit.

In elektrohydraulischen Kolbenpumpenaggregaten für hydraulische Bremsanlagen von Kraftfahrzeugen wandeln die Exzenterlager eine Drehbewegung eines Elektromotors oder einer Ausgangswelle eines Getriebes in eine Hubbewegung zum Antrieb der Pumpenkolben.

Im Stand der Technik ist bspw. die JP 61 215480 A bekannt. In der Schrift wird ein, auf einer Welle angeordnetes Exzenterlager mit Wälzkörpern, Lagerring und Halteelement beschrieben. Über diese Wälzkörper wird die Drehbewegung der Welle auf den Lagerring übertragen und das Entstehen von Reibungsverlusten vermieden. Gemäß der JP480 wird um dies zu realisieren, ein außenliegendes, in den Lagerring eingepresstes Halteelement für die Wälzkörper verwendet, in welches alle Wälzkörper eingefügt werden. Diese Wälzkörper weisen unterschiedliche Größen auf. Ebenfalls wird eine, zwischen allen Wälzkörpern innenliegende Welle verwendet, die in den sich ergebenden Zwischenraum der Wälzkörper eingefügt wird.

Weiterhin ist die FR 2 637 660 A1 bekannt. In der Schrift wird ein, auf einer Welle angeordnetes Exzenterlager mit Wälzkörpern und Lagerring beschrieben. Zur Positionierung der Wälzkörper werden in FR660 verschiedene Ausführungen vorgeschlagen, wie die Verwendung eines Rollenkäfigs oder das Vorsehen einer Aussparung im Lagerring.

### Offenbarung der Erfindung

Das erfindungsgemäße Exzenterlager mit den Merkmalen des Anspruchs 1 weist eine drehend antreibbare Welle auf, auf der ein Wälzlager mit einem die Welle umschließenden Lagerring und mit in einem Spalt zwischen der Welle und dem Lagerring um die Welle herum angeordneten Wälzkörpern auf, wobei die Wälzkörper äquidistant angeordnet sein können, aber nicht müssen. Im Unterschied zu bekannten Exzenterlagern ist die Welle des erfindungsgemäßen Exzenterlagers konzentrisch zu ihrer Drehachse vorgesehen, auch wenn denkbar und nicht von der Erfindung ausgeschlossen ist, dass die Welle exzentrisch zu ihrer Drehachse ist. Anstelle oder ggf. zusätzlich zu einer Exzentrizität der Welle ist der Lagerring exzentrisch zur Welle und die Wälzkörper weisen verschiedene Durchmesser auf entsprechend einer unterschiedlichen Spaltbreite zwischen der Welle und dem Lagerring aufgrund der Exzentrizität des Lagerrings zur Welle. Die Wälzkörper weisen Durchmesser auf, die so groß sind wie die Breite des Spalts zwischen dem Lagerring und der Welle an der Umfangsstelle, an der sich der jeweilige Wälzkörper befindet.

Bei einem Drehantrieb der Welle wälzen die Wälzkörper auf der Welle und im Lagerring und laufen um die Welle um wie es von Wälzlagern bekannt ist. Dabei drücken die Wälzkörper mit großem Durchmesser den Lagerring von der Welle ab und auf der gegenüberliegenden Seite, wo sich die Wälzkörper mit kleinem Durchmesser befinden, nähert sich der Lagerring der Welle. Es läuft sozusagen die sich ändernde Spaltbreite zusammen mit den Wälzkörpern um die drehend angetriebene Welle um, d.h. die breiteste, die engste und jede andere Spaltbreite laufen mit den Wälzkörpern um die Welle um. Der Lagerring bewegt sich auf einer Kreisbahn um die Welle mit einer Exzentrizität zur Welle. Eine Drehbewegung der Welle wird in eine Hubbewegung eines oder mehrerer außen am Lagerring anliegender Pumpenkolben gewandelt. Unter der Annahme eines nicht mit der Welle mitdrehenden Lagerrings laufen die Wälzkörper mit der halben Drehgeschwindigkeit der Welle um, ebenso halbiert sich die Geschwindigkeit, mit der sich der Lagerring auf der Kreisbahn bewegt. Das Exzenterlager weist eine Geschwindigkeitsuntersetzung auf, eine Umlaufgeschwindigkeit der Exzentrizität des Lagerrings ist bei drehfestem Lagerring halbiert im Verhältnis zur Drehgeschwindigkeit der Welle. Die Geschwindigkeitsuntersetzung hat den Vorteil, dass ein Antrieb mit höherer Drehzahl möglich ist, was bei gleicher Leistung die Verwendung eines kleineren und leichtern Elektromotors ermöglicht.

Erfindungsgemäß sind die beiden größten oder die beiden kleinsten Wälzkörper in Umfangsrichtung des Exzenterlagers durch einen Federbügel verbunden, wobei der Federbügel die verbundenen Wälzkörper in Umfangrichtung des Exzenterlagers elastisch auseinanderdrückt.

Hierdurch wird ein besonders geräuscharmes und langlebiges Exzenterlager ermöglicht.

Ein weiterer Vorteil des erfindungsgemäßen Exzenterlagers ist dessen einfacher und kostengünstiger Aufbau.

Das erfindungsgemäße Exzenterlager ist insbesondere zur erläuterten Verwendung in einem elektrohydraulischen Kolbenpumpenaggregat zur Erzeugung eines Bremsdrucks in einer hydraulischen Bremsanlage eines Kraftfahrzeugs vorgesehen, wo es die Drehbewegung eines Elektromotors in eine Hubbewegung zum Antrieb von Pumpenkolben wandelt. Die Erfindung ist allerdings nicht auf diese Verwendung beschränkt sondern richtet sich darüber hinaus auf das Exzenterlager als solchem.

Die Unteransprüche haben vorteilhafte Ausgestaltungen und Weiterbildungen der im Anspruch 1 angegebenen Erfindung zum Gegenstand.

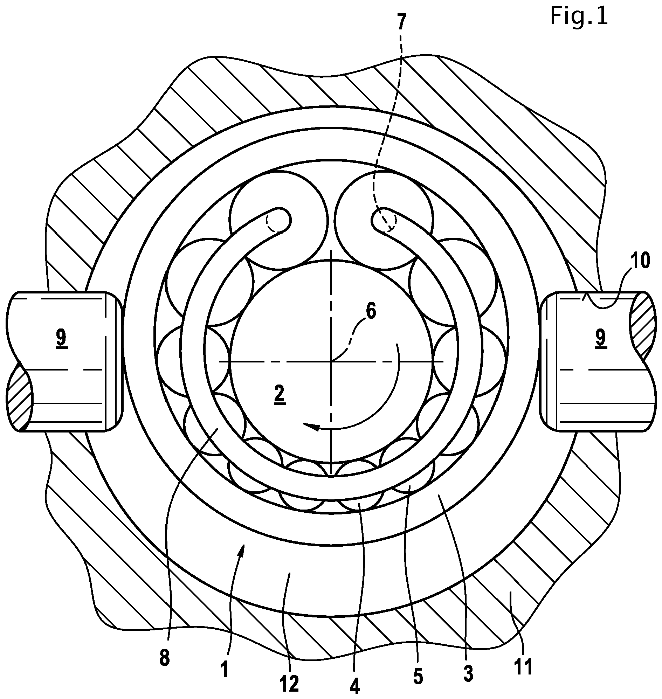

### Kurze Beschreibung der Zeichnung

Die Erfindung wird nachfolgend anhand eines in der Zeichnung dargestellten Ausführungsbeispiels näher erläutert. Die einzige Figur zeigt ein erfindungsgemäßes Exzenterlager in Stirnansicht.

### Ausführungsform der Erfindung

Das in der Zeichnung dargestellte erfindungsgemäße Exzenterlager 1 weist eine Welle 2 auf, die von einem Lagerring 3 umschlossen ist. In einem Spalt 4 zwischen dem Lagerring 3 und der Welle 2 sind Rollen 5 als Wälzkörper um die Welle 2 herum angeordnet. Der Lagerring 3 und die Rollen 5 können ggf. zusammen mit der Welle 2 als Wälzlager aufgefasst werden. Die Welle 2 ist mit einem in der Zeichnung nicht sichtbaren weil hinter der Zeichenebene befindlichen Elektromotor drehend um ihre Achse 6, die zugleich ihre Drehachse ist, antreibbar. Die Welle 2 weist keine Exzentrizität auf. Sie kann beispielsweise das Ende einer Motorwelle des Elektromotors sein.

Der Lagerring 3 ist exzentrisch zur Welle 2, eine Breite des Spalts 4 zwischen dem Lagerring 3 und der Welle 2 ändert sich in Umfangsrichtung. Ausgehend von einer größten Spaltbreite, die in der Zeichnung oben ist, verkleinert sich die Spaltbreite in beiden Umfangsrichtungen zu einer kleinsten Spaltbreite, die sich der größten Spaltbreite gegenüber, in der Zeichnung also unten, befindet.

Die Rollen 5, die die Wälzkörper bilden, weisen verschiedene Durchmesser entsprechend der unterschiedlichen Spaltbreite auf. Die Durchmesser der Rollen 5 sind jeweils so groß wie der Spalt 4 zwischen dem Lagerring 3 und der Welle 2 an der Stelle ist, an der sich die jeweilige Rolle 5 befindet.

Bei einem drehenden Antrieb der Welle 2 wälzen die Rollen 5 auf einem Umfang der Welle 2 und laufen dabei mit halber Drehgeschwindigkeit wie die Welle 2 um. Zusammen mit den beiden Rollen 5 mit den größten Durchmessern läuft die größte Spaltbreite des Spalts 4 zwischen dem Lagerring 3 und der Welle 2 um. Ebenso läuft die kleinste Spaltbreite des Spalts 4 zwischen dem Lagerring 3 und der Welle 2 mit den beiden Rollen 5 mit den kleinsten Durchmessern mit der halben Drehgeschwindigkeit der Welle 2 um die Welle 2 um. Anders ausgedrückt läuft eine Exzentrizität des Lagerrings 3 in Bezug auf die Welle 2 bei einem Drehantrieb der Welle 2 um die Welle 2 um, wobei die Umlaufgeschwindigkeit der Exzentrizität halb so groß wie die Drehgeschwindigkeit der Welle 2 ist, wenn der Lagerring 3 nicht mitdreht. Der Lagerring 3 bewegt sich auf einer Kreisbahn um die Achse 6 der Welle 2, die zugleich ihre Drehachse ist, wobei eine Geschwindigkeit der Kreisbewegung des Lagerrings 3 halb so groß wie die Drehgeschwindigkeit der Welle 2 ist, es findet also eine Geschwindigkeitsuntersetzung statt.

Die beiden Rollen 5 mit den größten Durchmessern und die beiden Rollen 5 mit den kleinsten Durchmessern weisen einen Abstand voneinander in Umfangsrichtung auf. Die Rollen 5 zwischen den größten und den kleinsten Rollen 5 liegen aneinander und an der größten und der kleinsten Rolle 5 an, sind allerdings nicht miteinander verbunden. Das Exzenterlager 1 weist keinen Rollenkäfig oder dgl. auf. Verbunden sind nur die beiden Rollen 5 mit den größten Durchmessern: Sie weisen Axiallöcher 7 auf, mit denen sie auf abgewinkelten Enden eines Federbügels 8 drehbar gelagert sind. Der Federbügel 8 ist ein kreisförmiger, an einer Stelle offener Drahtbügel 8, der die Welle 2 ungefähr in einer Mitte des Spalts 4 zwischen dem Lagerring 3 und der Welle 2 umschließt. Der Federbügel 8 befindet sich seitlich neben den Rollen 5 und damit ggf. auch seitlich neben dem Lagerring 3 und/oder der Welle 2. Die Enden des Federbügels 8 sind wie bereits gesagt rechtwinklig abgewinkelt, sie verlaufen achsparallel zur Welle 2.

Der Federbügel 8 beaufschlagt die beiden Rollen 5 mit den größten Durchmessern mit einer Vorspannung elastisch federnd auseinander, d.h. in den enger werdenden Spalt 4 zwischen dem Lagerring 3 und der Welle 2. Durch die Federbeaufschlagung beaufschlagen die Rollen 5 mit den größten Durchmessern die an ihnen anliegenden folgenden Rollen 5 ebenfalls in Richtung des enger werdenden Spalts 4 zwischen dem Lagerring 3 und der Welle 2, so dass jede Rolle 5 in Richtung des enger werdenden Spalts 4 beaufschlagt wird. Die federnde Beaufschlagung der beiden Rollen 5 mit den größten Durchmessern bewirkt eine Spielfreiheit des Lagerrings 3 auf der Welle 2. Außer den beiden Rollen 5 mit den größten Durchmessern, die elastisch auseinandergedrückt werden, sind keine weiteren Rollen 5 miteinander verbunden, sondern liegen lediglich aneinander an.

Außen am Lagerring 3 liegen Pumpenkolben 9 mit ihren Stirnenden am Lagerring 3 an. Die Pumpenkolben 9, von denen in der Zeichnung lediglich Stirnenden dargestellt sind, sind radial zur Welle 2 angeordnet und werden von nicht dargestellten Kolbenfedern von außen gegen den Lagerring 3 gedrückt. Die Pumpenkolben 9 sind in Pumpenbohrungen 10 eines Pumpengehäuses 11 axial verschieblich, d.h. radial zur Welle 2 verschieblich aufgenommen. Das Exzenterlager 1 befindet sich in einem zylindrischen Exzenterraum 12 des Pumpengehäuses 11 zwischen den beiden Pumpenkolben 9, die im Ausführungsbeispiel einander gegenüber, also in Boxeranordnung angeordnet sind. Durch drehenden Antrieb der Welle 2 bewegt sich der Lagerring 3, ohne sich mit der Welle 2 mitzudrehen, mit halber Geschwindigkeit wie der Drehgeschwindigkeit der Welle 2 auf einer Kreisbahn um die Achse 6 und Drehachse der Welle 2. Die Kreisbewegung des Lagerings 3 treibt die Pumpenkolben 9 zu einer Hubbewegung an. Das Exzenterlager 1 wandelt somit eine Drehbewegung der Welle 2 in eine Hubbewegung zum Antrieb der Pumpenkolben 9. Das Pumpengehäuse 11 ist Bestandteil eines sog. Hydraulikblocks, in dem außer den Pumpenkolben 9 weitere, nicht dargestellte hydraulische Bauelemente wie Magnetventile einer Schlupfregeleinrichtung für eine hydraulische Bremsanlage eines Kraftfahrzeugs angeordnet und hydraulisch miteinander verschaltet sind. Solche Hydraulikblöcke sind an sich bekannt und sollen hier nicht weiter erläutert werden.

## Patentansprüche

1. Exzenterlager zum Wandeln einer Drehbewegung in eine Hubbewegung, mit einer drehend antreibbaren Welle (2), mit einem die Welle (2) umschließenden Lagerring (3), und mit Wälzkörpern (5), die in einem Spalt (4) zwischen der Welle (2) und dem Lagerring (3) um die Welle (2) herum angeordnet sind, und der Lagerring (3) exzentrisch zur Welle (2) ist und die Wälzkörper (5) verschiedene Durchmesser entsprechend einer unterschiedlichen Spaltbreite zwischen der Welle (2) und dem Lagerring (3) aufweisen, **dadurch gekennzeichnet,** die beiden größten oder die beiden kleinsten Wälzkörper (5) in Umfangsrichtung des Exzenterlagers (1) durch einen Federbügel (8) verbunden sind, wobei der Federbügel (8) die verbundenen Wälzkörper in Umfangrichtung des Exzenterlagers elastisch auseinanderdrückt.

2. Exzenterlager nach Anspruch 1, **dadurch gekennzeichnet, dass** zwischen zwei größten und/oder zwei kleinsten Wälzkörpern (5) ein Abstand in Umfangsrichtung besteht.

3. Exzenterlager nach Anspruch 1, **dadurch gekennzeichnet, dass** benachbarte Wälzkörper (5) nicht miteinander verbunden sind.

4. Exzenterlager nach Anspruch 1, **dadurch gekennzeichnet, dass** das Exzenterlager keinen Wälzkörperkäfig aufweist.

## Claims

1. Eccentric bearing for converting a rotational movement into a lifting movement, with a rotationally driveable shaft (2), with a bearing ring (3) surrounding the shaft (2), and with rolling bodies (5) which are arranged in a gap (4) between the shaft (2) and the bearing ring (3) around the shaft (2), and the bearing ring (3) is eccentric to the shaft (2), and the rolling bodies (5) have different diameters according to a different gap width between the shaft (2) and the bearing ring (3), **characterized in that** the two largest or the two smallest rolling bodies (5) are connected in the circumferential direction of the eccentric bearing (1) by a spring clip (8), wherein the spring clip (8) presses the connected rolling bodies apart from one another elastically in the circumferential direction of the eccentric bearing.

2. Eccentric bearing according to Claim 1, **characterized in that** there is a spacing in the circumferential direction between two largest and/or two smallest rolling bodies (5).

3. Eccentric bearing according to Claim 1, **characterized in that** adjacent rolling bodies (5) are not connected to one another.

4. Eccentric bearing according to Claim 1, **characterized in that** the eccentric bearing does not have a rolling body cage.

## Revendications

1. Palier excentrique destiné à convertir un mouvement de rotation en un mouvement de levage, comprenant un arbre (2) pouvant être entraîné en rotation, une bague de palier (3) entourant l'arbre (2) et des corps de roulement (5) qui sont disposés dans une fente (4) entre l'arbre (2) et la bague de palier (3) autour de l'arbre (2), la bague de palier (3) étant excentrée par rapport à l'arbre (2) et les corps de roulement (5) présentant différents diamètres correspondant à une largeur de fente différente entre l'arbre (2) et la bague de palier (3), **caractérisé en ce que** les deux plus gros ou les deux plus petits corps de roulement (5) dans la direction périphérique du palier excentrique (1) sont reliés par un étrier à ressort (8), l'étrier à ressort (8) repoussant l'un de l'autre élastiquement les corps de roulement reliés dans la direction périphérique du palier excentrique.

2. Palier excentrique selon la revendication 1, **caractérisé en ce qu'**une distance dans la direction périphérique existe entre deux plus gros et/ou deux plus petits corps de roulement (5).

3. Palier excentrique selon la revendication 1, **caractérisé en ce que** des corps de roulement adjacents (5) ne sont pas reliés les uns aux autres.

4. Palier excentrique selon la revendication 1, **caractérisé en ce que** le palier excentrique ne présente pas de cage de corps de roulement.
